Europäisches Patentamt

European Patent Office

Office européen des brevets

(11) Publication number: **0 508 283 A2**

# EUROPEAN PATENT APPLICATION

(21) Application number: **92105561.2**

(22) Date of filing: **31.03.92**

(30) Priority: **08.04.91 JP 75208/91**

(43) Date of publication of application:
**14.10.92 Bulletin 92/42**

(84) Designated Contracting States:
**DE GB**

(51) Int. Cl.⁵: **G06F 13/10, G06F 13/00**

(71) Applicant: **Kabushiki Kaisha Toshiba**
**72, Horikawa-cho Saiwai-ku**
**Kawasaki-shi(JP)**

(72) Inventor: **Toko, Makoto, c/o**
**Intell.Prop.Division**

**K.K. Toshiba, 1-1 Shibaura 1-chome,**
**Minato-ku**
**Tokyo 105(JP)**
Inventor: **Kusakabe, Hiroyuki, c/o**
**Intell.Prop.Division**
**K.K. Toshiba, 1-1 Shibaura 1-chome,**
**Minato-ku**
**Tokyo 105(JP)**

(74) Representative: **Henkel, Feiler, Hänzel &**
**Partner**
**Möhlstrasse 37**
**W-8000 München 80(DE)**

(54) **Programmable controller.**

㉗ According to this invention, in a cycle for reading
a sequence program by an MPU (25), a custom LSI
(33) connected to the MPU (25) translates a logical
address of operand data designated by a register
into a physical address and supplies it to the MPU
(25). A means (101 - 113) for, when the MPU is to
read/write data by a function process, translating a
register logical address designated by the sequence
program and read/write access to a specific address
into a physical address, accessing a data memory
(45), and reading/writing the accessed data as the
data of the specific address, is arranged in the
custom LSI (33).

F I G. 6

The present invention relates a programmable controller having an operation processing ability (speed) improved by using a custom LSI (gate array).

Data of a sequence program executed by a programmable controller (to be referred to as a PC hereinafter) is generally written by using a logical address. Therefore, when the PC accesses the data, the logical address must be translated into a physical address. In a conventional technique, this translation process is performed by a microprocessor unit (MPU) in the PC. There are two cases for designating data in the sequence program. That is, a register storing the data is designated by an instruction, and the data itself is directly designated by the instruction. Therefore, the MPU must determine whether the data designation is performed by a register or a constant. For this reason, the MPU is overloaded, and an increase in processing speed is prevented.

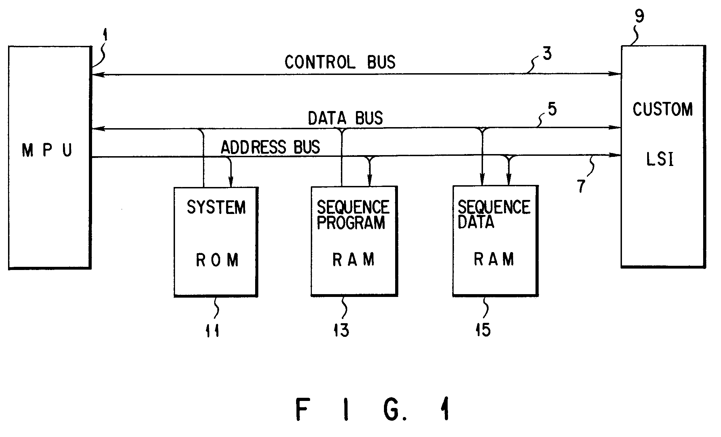

In order to solve the above problem, a conventional PC is developed as shown in Fig. 1. In Fig. 1, an MPU 1 is connected to a custom LSI (Large Scale Integration) 9 through a control bus 3, a data bus 5, and an address bus 7, and the MPU 1 is also connected to a system ROM 11 for storing a system program of the MPU 1, a sequence program RAM 13 for storing the sequence program, and a sequence data RAM 15 for storing sequence data through the data bus 5 and the address bus 7. The custom LSI 9 is constituted by a gate array and exclusively performs a bit operation process to be controlled with the MPU 1. For example, the bit operation process is a relay sequence process. The MPU 1 executes a function process. For example, the function process is an arithmetic and logic operation, data transfer, or a mathematical function process. That is, the MPU 1 reads a sequence program code from the sequence program RAM 13, decodes the sequence program code, and determines whether data is designated by a register or a constant. The sequence program code is an object code of an application (user) program written in a compiler language. When the data is designated by the register, the logical address of the register is translated into a physical address in a main memory, and corresponding data is read from the sequence data RAM 15, thereby executing a sequence process.

In the PC shown in Fig. 1, the custom LSI 9 has a simple arrangement. However, as described above, since the MPU 1 must determine whether the data is designated by the resistor or the constant and must translate the logical address of the register into the physical address, the operation processing speed of the PC is disadvantageously decreased.

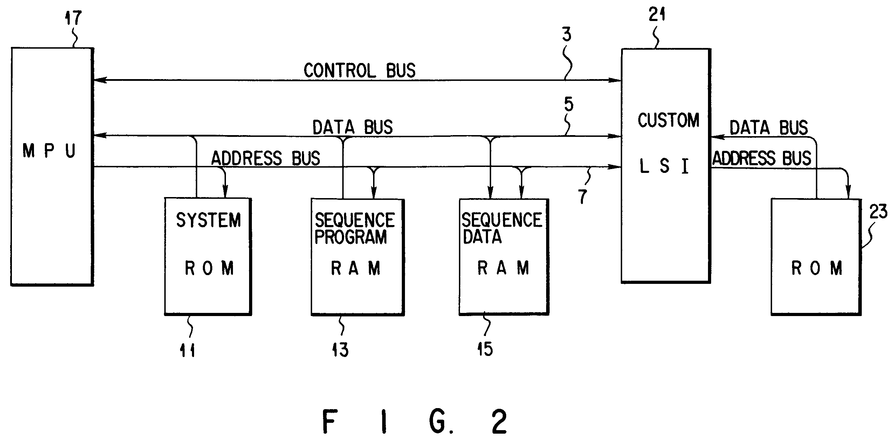

In order to overcome the above drawback, a PC is developed as shown in Fig. 2. In the PC shown in Fig. 2, a custom LSI 21 executes a function process. In this example, the custom LSI 21 reads a sequence program code from a sequence program RAM 13. In addition, the LSI 21 decodes the read program code, translates a register logical address into a physical address, and reads corresponding data from a sequence data RAM 15. When the LSI 21 is to execute a function process, the LSI 21 accesses function process execution data corresponding to the program sequence code from a ROM 23 and executes it. The function process execution data code is an object code written by, e.g., an assembler language, and used for performing the above arithmetic and logic operation, data transfer, and a flag process.

In example shown in Fig. 1, since the MPU 1 must perform the determination of a register or a constant and the address translation, an address translation time occupies a large part of a whole function processing time. For this reason, the operation processing speed of the PC is decreased.

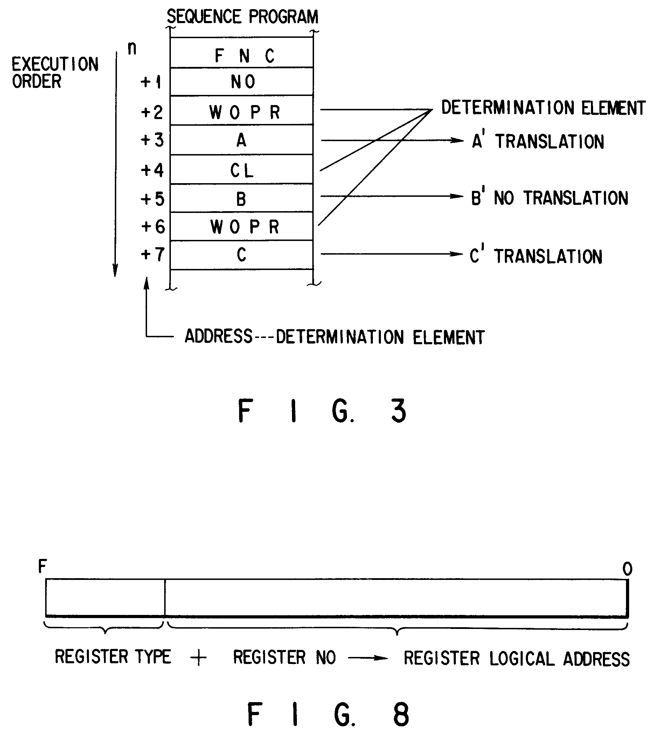

It is assumed that the MPU 1 performs a sequence program (adding) process shown in Fig. 3. The custom LSI 19 reads an "FNC" (function) from an address n of the sequence program RAM 13. Since the custom LSI 19 cannot execute the function process, the MPU 1 is requested to execute the function process. The MPU 1 reads the "FNC" of the address n again and a "No." of an address n + 1 and determines this process as an adding process. In addition, the MPU 1 determines whether each of an augend (WOPR + A), an addend (CL + B), and an addition result (WOPR + C) is a register or a constant, and the MPU 1 executes a process corresponding to each of the register and the constant. When the register is determined, only the content of the register address is used for an operation. For this reason, after a physical register address is obtained, the MPU 1 must access the content. On the other hand, when the constant is determined, a value read in the sequence program is directly used. In the example in Fig. 3, A and C represent register logical addresses, and B represents a constant. That is, Fig. 3 shows a structure of the program code of the sequence program. In the example in Fig. 3, a function (FNC) is stored at the address n, a function number is stored at the address n + 1, and a word operand (WOPR) representing that an operand is designated by a register is stored at an address n + 2. Therefore, the address A stored at an address n + 3 is translated into a physical address A'. A constant (Constant Low) representing that the next operand is a constant is stored at an address n + 4. Therefore, the constant B stored at an address n + 5 is not translated. In addition, since the word operand (WOPR) representing that the operand is designated by the register is stored at an address n + 6, the address C stored at an address n + 7 is translated into a physical address C'. In the above processes, the MPU 1 must perform the following processes to obtain a register physical address from a register logical address.

1. Determination of register or constant
2. Determination of register type
3. Addition of designation definite offset of each register type
4. Determination of designation indefinite offset type belonging to program
5. Reading of designation indefinite offset amount belonging to program
6. Addition of designation indefinite offset amount belonging to program
7. Determination, reading, and addition of other indefinite offset amounts

The determination of register type of the item 2 is performed due to the following reason. That is, since offset values are different from each other depending on register types, a register type is determined, and an offset value must be determined by the determined register type. The designation definite offset belonging to a program is the content of an index register designated by a user in an application program.

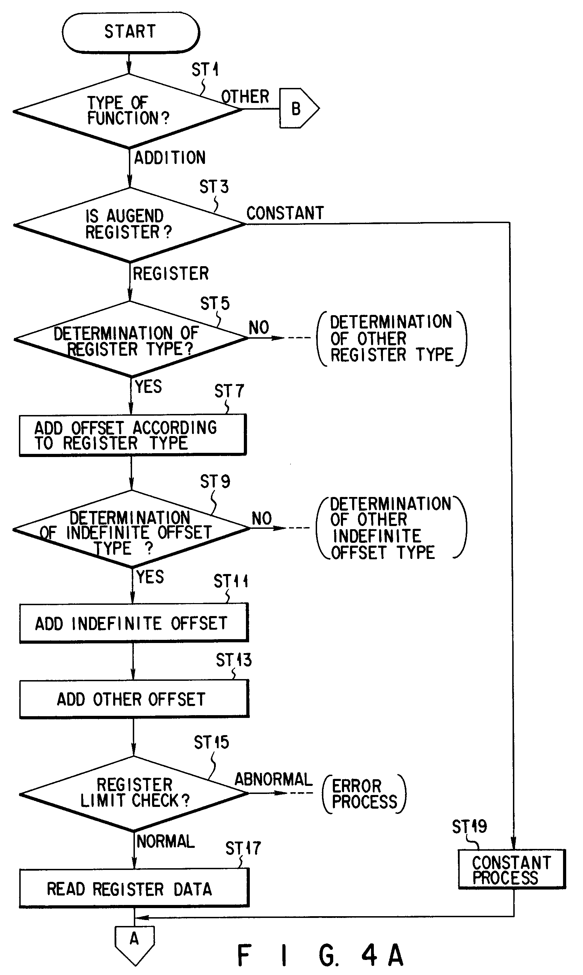

In this case, as shown in Figs. 4A and 4B, an MPU determines a type of function in step ST1. When the type of function is an addition type, the MPU determines in step ST3 whether an augend is designated by a register or a constant. In step ST3, when the MPU determines that the augend is designated by a register, the MPU determines a register type in step ST5. In step ST7, an offset amount of each of register types is added to a register number of an augend. In addition, in step ST9, the MPU determines a designation definite offset type belonging to a program. That is, the MPU determines whether index modification is performed in the application program.

If YES in step ST9, the indefinite offset amount designated by the index register is added to the register number of the augend by the MPU. In step ST13, determination, reading, and addition of other indefinite offset amounts are performed. The MPU determines whether the resultant address value obtained as described above falls within a defined range of a memory address space to which the register of the address value is assigned. When the MPU determines in step ST15 that the value falls within the defined range, the MPU reads the content of the register using an address obtained by a calculation in step ST17. In addition, the MPU executes a read process of addend data in step ST21 in Fig. 4B, and the MPU performs an adding process of the addend and the augend in step ST23. In step ST25, the MPU stores the addition result in a memory.

As described above, the MPU 1 must perform a large number of processes to translate a register logical address into a physical address, and these processes must be performed in an FNC process.

In the PC shown in Fig. 2, although the operation processing speed of the PC is increased, the number of gates of the custom LSI 21 and the number of peripheral elements (the ROM 23 and the like) are increased. For this reason, the entire circuit of the PC is complicated, and the PC is not economical.

It is an object of the present invention to provide a programmable controller simplifying the system arrangement of the PC to suppress an increase in cost and satisfying a sequence execution time of the PC required by a user.

According to the present invention, in order to achieve the above object, there is provided a programmable controller having a microcomputer for performing a function process including system management and a numerical operation during execution of a sequence program, a custom LSI, connected to the microcomputer through a system bus, for performing a bit operation process of the sequence program, and a memory for storing the sequence program, wherein, when the microcomputer is to perform the function process, in a cycle for reading the sequence program from the memory, the custom LSI has a function of translating a register logical address written in the sequence program into a physical address of the microcomputer.

According to the present invention, there is provided a programmable controller having a microcomputer for performing a function process including system management and a numerical operation during execution of a sequence program, a custom LSI for performing a bit operation process of the sequence program, a program memory for storing the sequence program, and a data memory for storing data, wherein a custom LSI comprises means, when the microcomputer is to read/write data by the function process, translating a logical address designated by the sequence program and by performing read/write access to a specific address into a physical address, accessing the data memory, and reading/writing accessed data as data of the specific address.

With the above arrangement, when a microcomputer is to read/write data by a function process, and a specific address is accessed, a register logical address designated by a sequence program is translated into a physical address by the means arranged in the custom LSI, thereby accessing the data memory. Therefore, the following programmable controller can be obtained. In this programmable controller, a load on the microcomputer can be reduced without complication of the custom LSI, and a processing speed of the sequence program can be increased.

According to the present invention, when the operand data of the sequence program is designated by a register, the custom LSI translates a logical address into a physical address to supply it to the MPU. For this reason, the MPU 25 need not perform the translation. Therefore, an execution time can be reduced.

According to the programmable controller of the present invention, the custom LSI is not complicated, or no extra peripheral element is required, thereby resulting in low cost. In addition, a time required for register address translation during the function process of the MPU can be reduced, and a programmable controller satisfying a sequence execution processing time required by a user can be obtained.

Since the system bus on the MPU side and the system bus on the gate array side (GA2) can be disconnected from each other, while the gate array performs a bit operation and address translation, the MPU can perform a systematic management by using a system ROM and a system RAM. In addition, since a circuit for controlling connection/disconnection of the buses can be included in the gate array, a peripheral circuit can be simplified. In the system shown in Fig. 1, as is apparent from Fig. 1, a bus cannot be disconnected. For this reason, a bus request circuit must have a bus arbitrator circuit, thereby complicating the arrangement of the peripheral circuit. In the system shown in Fig. 2, the system bus on the MPU side and the system bus on the gate array side are entirely independent buses. However, while the custom bus is activated, both the buses are occupied by the custom LSI.

This invention can be more fully understood from the following detailed description when taken in conjunction with the accompanying drawings, in which:

Fig. 1 is a block diagram showing a conventional programmable controller in which a custom LSI performs a bit operation process;
Fig. 2 is a block diagram showing a conventional programmable controller in which a custom LSI performs not only a bit operation process but a function process;
Fig. 3 is a view for explaining, in a sequence program, operand data (resister designation) requiring address translation and operand data (constant) requiring no address translation;
Figs. 4A and 4B are views showing parts of a flow chart for translating a logical address into a physical address;
Fig. 5 is a block diagram showing an embodiment of a programmable controller according to the present invention;
Fig. 6 is a block diagram showing a custom LSI shown in Fig. 5 in detail;
Fig. 7 is a block diagram showing an address translator shown in Fig. 6 in detail;
Fig. 8 is a view showing a format of operand data obtained by register designation;
Fig. 9 is a view showing a relationship between a logical memory address map and a physical memory address map;
Fig. 10 is a detailed block diagram showing an address translator according to the second embodiment of the present invention;
Fig. 11 is a flow chart showing a function process operation in the second embodiment; and
Figs. 12A through 12D timing charts for reading the operand "A" shown in Fig. 3.

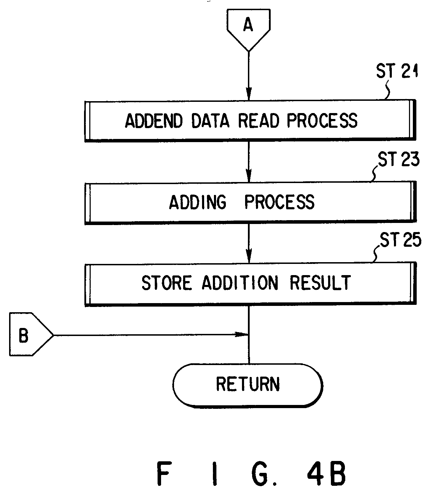

Fig. 5 is a block diagram showing an embodiment of a programmable controller according to the present invention. A microprocessor unit (to be referred to as an MPU hereinafter) 25 is connected to a custom LSI 33 through a control bus (including read/write lines) 27, a data bus 29, and an address bus 31. In addition, the MPU 25 is connected to a system ROM 35 and a system RAM 37 through the data bus 29 and the address bus 31. The operating system of the MPU 25 is stored in the system ROM 35. The system RAM 37 is used as the work area or operation area of the MPU 25. In addition, the custom LSI 33 is connected to a sequence program RAM 43 and a sequence data RAM 45 through a data bus 39 and an address bus 41.

A user application program is stored in the sequence program RAM 43. The content and the like of a register designated by operand data, a operation result, status information, and a sequence program are stored in a sequence data RAM 45.

The custom LSI 33 is constituted by, e.g., a gate array. The custom LSI 33 fetches a sequence program from the sequence program RAM 43 and determines whether the sequence program can be processed by itself. When the fetched sequence program can be processed by itself, e.g., a bit operation process, the custom LSI 33 decodes a program code, translates a logical address into a physical address, reads corresponding data from the sequence data RAM 45, and performs the bit operation process.

On the other hand, when the fetched sequence program cannot be processed by the custom LSI 33, e.g., a function operation, the MPU 25 is requested to process the fetched sequence program. In response to this request, the MPU 25 reads information such as a sequence state from the custom LSI 33, detects a content to be processed, fetches the sequence program from the sequence program RAM 43, and performs the process requested by the custom LSI. After this process is ended, the MPU 25 supplies process end information to the custom LSI 33. The custom LSI 33 starts the sequence process again in response to the process end information.

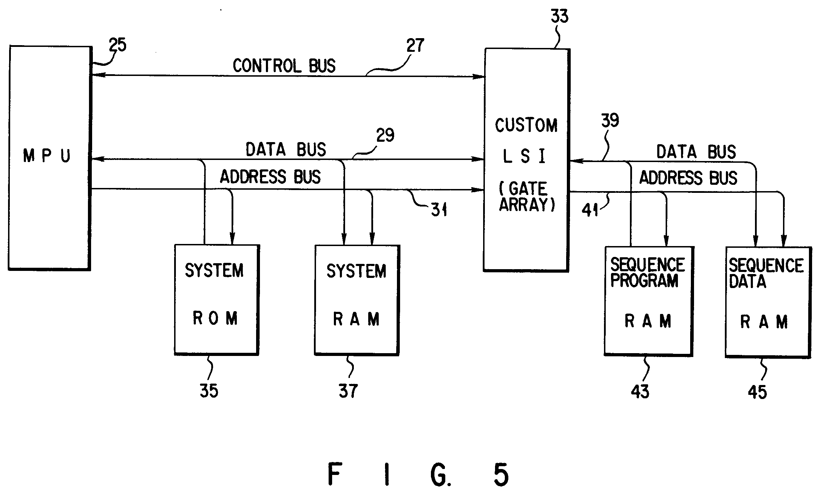

When a part (a constant and a logical address) of the sequence program fetched by the MPU 25 is to be processed, the part is translated into a practical code (a program address and a register physical address) by a circuit shown in Fig. 6.

As shown in Fig. 6, the gate array 33 includes a data bus control 47, a gate control 49, an instruction pointer generator 51, an address control 53, an address translator 55, an address modification 57, and a translation timing generator 59.

The data bus control 47 is constituted by bi-directional drivers 61, 63, 65, and 67. When the gate array 33 accesses the sequence program RAM 43 or the sequence data RAM 45, the bus control 47 disables the bus drivers 61, 63, 65, and 67 and disconnects the data bus 29 on the MPU 25 side from the data bus 39 on the gate array 33 side. When the MPU 25 write data in the sequence data RAM 45, the data bus control 47 disables the bus drivers 63, 65, and 67, enables the bus driver 61, and supplies the data from the MPU 25 onto the data bus 39. In addition, when the MPU 25 is to read data from the sequence program RAM 43 or the sequence data RAM 45, the data bus control 47 disables the bus drivers 61, 65, and 67 and enables the bus driver 63 to supply the data read from the sequence program RAM 43 or the sequence data RAM 45 onto the data bus 29. A logical address of data is translated into a physical address by the address translator 55, and the data bus control 47 disables the bus drivers 61, 63, and 65 and enables the bus driver 67 to supply the translated data onto the data bus 29. In addition, when the MPU 25 reads the content of the instruction pointer generator 51, the data bus control 47 disables the bus drivers 61, 63, 67 and enables the bus driver 65 to supply the content of an instruction pointer onto the data bus 29.

When the custom LSI 33 is to read a sequence program stored in the sequence program RAM 43, the gate control 49 supplies an enable signal to a bus driver 54 of the address control 53 and supplies a disable signal to a bus driver 52. As a result, an instruction pointer generated from the instruction pointer generator 51 is supplied to the sequence program RAM 43 through the address bus 41. On the other hand, when the MPU 25 is to access the sequence program RAM 43, information of read or write access is supplied from the MPU 25 to the gate control 49 through a read/write line in the control bus 27. Therefore, the gate control 49 supplies an enable signal to the bus driver 52 of the address control 53 and supplies a disable signal to the bus driver 54. As a result, an instruction pointer generated by the instruction pointer generator 51 is interrupted by the bus driver 54, and the address supplied from the MPU 25 is supplied to the sequence program RAM 43 through the bus driver 52 and the address bus 41.

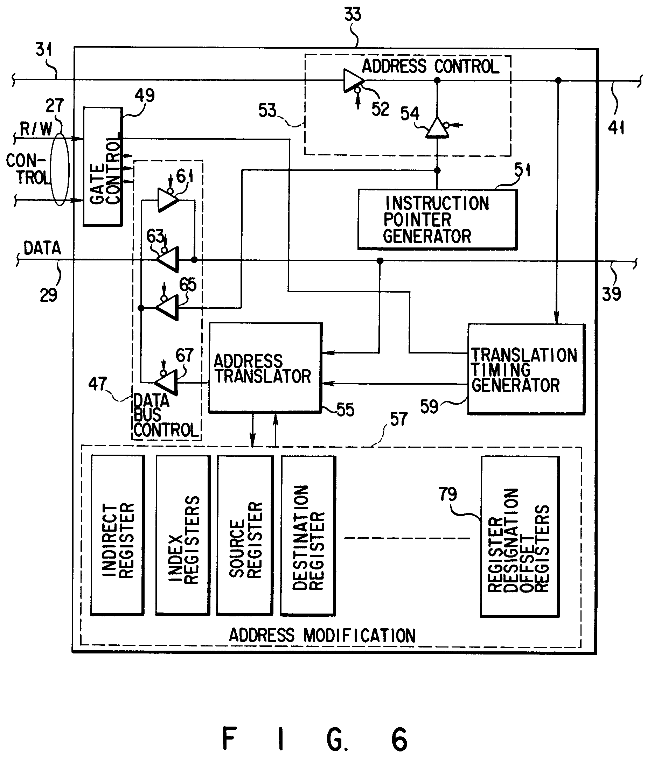

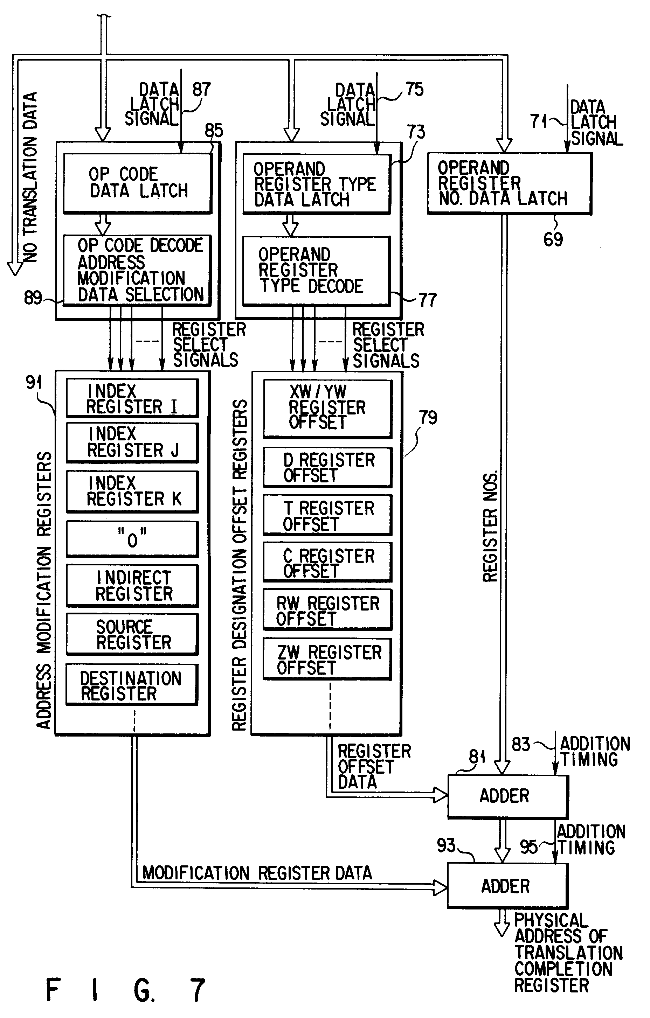

Fig. 7 is a circuit diagram showing the address translator 55 shown in Fig. 6 in detail. A register logical address, e.g., a register logical address "A" shown in Fig. 3, is constituted by a register type and a register No. as shown in Fig. 8. The maximum value of the register No. is varied depending on each type of the MPU 25 and each register type. In order to effectively use a memory, a physical address is obtained for a register offset of each register type and a register No. separately. Since an instruction word (an operation code and an operand) are commonly used for different MPU types, an allowable range of a register No. is set equal to that of a register No. having a maximum value in each MPU type.

In Fig. 7, a data latch 69 latches an operand register No. in response to a data latch signal 71 supplied from the translation timing generator 59. A data latch 73 latches operand register type data in response to a data latch signal 75 supplied from the translation timing generator 59. The operand register type data latched by the data latch circuit 73 is decoded by a decode 77 to determine an operand register type. The decode 77 outputs register select signal for selecting a designated operand register to a register designation offset amount register file 79 of the address modification 57. The register file 79 outputs register offset data corresponding to the supplied register select signal to an adder 81. Operand register No. data from the data latch 69 is supplied to the adder 81. Therefore, the adder 81 adds the register offset data to the register No. data in response to an addition timing signal 83. The adder 81 outputs an addition result to an adder 93. A data latch 85 latches an operation code of a sequence program in response to a data latch signal 87 from the translation timing generator 59. A decode 89 decodes the operation code output from the data latch 85 to determine the type of a register designated for address modification. In this embodiment, as registers used for index modification, there are index registers I, J, and K, a "D" register, an indirect register, a source register, and a destination register. The decode 89 decodes an operation code to determine a designated register and outputs a register select signal for selecting the designated register to a register file 91 of the address modification 57. The register file 91 outputs the content of the register designated by the register select signal to the adder 93 as modification register data. As a result, the adder 93 adds the modification register data to the addition result of the adder 81 in response to an addition timing signal 95 from the translation timing generator 59 to output a register physical address.

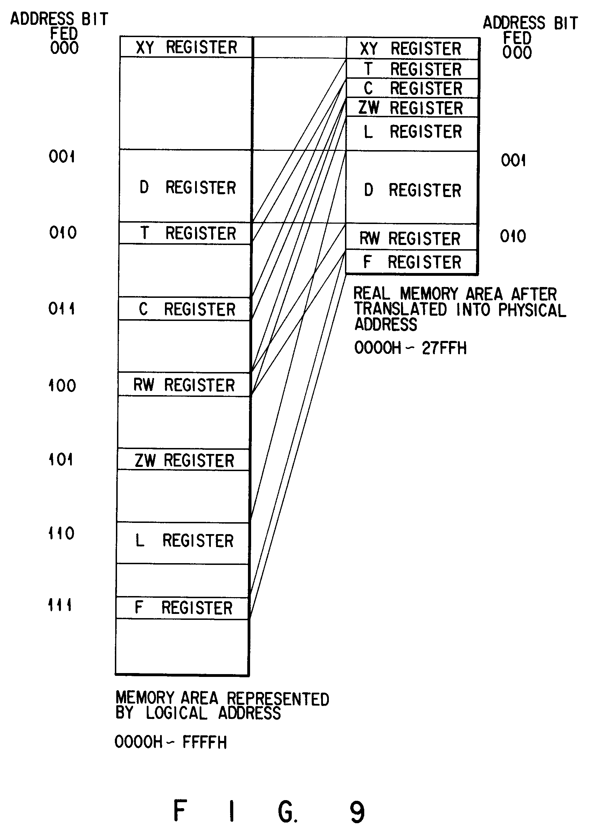

As a result, logical addresses mapped on 0000H to FFFFH as shown in Fig. 9 can be reduced to a physical memory address space from 0000H to 27FFH.

An operation of the above embodiment will be described below.

In the custom LSI 33, the gate control 49 supplies a disable signal to the bus drivers 61, 63, 65, and 67 of the data bus control 47. The data bus control 47 disables the bus drivers 61, 63, 65, and 67 and disconnects the data bus 9 on the MPU 25 side from the data bus 39 on the custom LSI 33 side. The gate control 49 supplies a control signal to the address control 53. The address control 53 disables the bus driver 52 and enables the bus driver 54 in response to the control signal. An instruction pointer from the instruction pointer generator 51 is supplied to the sequence program RAM 43 through the bus driver 54 and the address bus 41. The first word of a sequence program at a location corresponding to the instruction pointer, e.g., "FNC" shown in Fig. 3, is output on the data bus 38 from the sequence program RAM 43. The sequence program on the data bus 39 is fetched in the address translator 55. That is, the data latch 85 latches an operation code in response to the data latch signals 87, 75, and 71. An operation code latched by the data latch 85 is decoded by the decode 89. Upon this decoding, the custom LSI 33 determines that the read data is a function code, the second word of the sequence program, e.g., "No." in Fig. 3 is read in the same procedures as described above. As a result, the custom LSI 33 determines that the processing content is not a bit operation process, and the custom LSI 33 informs the MPU 25 of it through the control bus 27. The address translator 55 causes a specific register (not shown) in the address modification 57 to store the function "FNC" and the "function No.". The MPU 25 reads the function and the function No. set in the specific register, and the MPU 25 reads the content of the instruction pointer generator 51 through the bus driver 65 and the data bus 29. The MPU 25 sequentially reads the third word of the sequence program, e.g., a word operand "WOPR" in Fig. 3, and the fourth word, e.g., a register designation "A" in the address bus 31. At this time, the pieces of information "WOPR" and "A" read from the sequence program RAM 43 are stored in the address translator 55 through the data bus 39. As a result, the address translator 55 detects that a logical address must be translated into a physical address. At this time, the bus driver 63 of the data bus control 47 is disabled in response to a control signal from the gate control 49 so as to interrupt the supply of the pieces information "WOPR" and "A" to the MPU 25.

A register select signal for selecting a register designated by an operation code for address modification is output by the decode 89 to the address modification register file 91. The register file 91 outputs the content of the designated register to the adder 93. On the other hand, the data latch 73 outputs operand register type data to the operand register type decode 77. The operand register type decode 77 determines the type of an operand register and outputs a signal for selecting the designated register to the register designation offset amount register file 79. The register designation offset amount register file 79 outputs register offset data stored in the designated register to the adder 81. The adder 81 adds the register No. data supplied from the data latch 69 and the register offset data output from the register file 79 in response to the addition timing signal 83 supplied from the translation timing generator 59 and supplies the addition result to the adder 93. The adder 93 adds the addition result from the adder 81 and modification register data from the register file 91 in response to the addition timing signal 95 supplied from the translation timing generator 59 so as to generate a physical address.

The gate control 49 supplies a control signal to the data bus control 47 to disable the bus drivers 61, 63, and 65 and to enable the bus driver 67. Data having a physical address translated from a logical address by the address translator 55 is supplied to the MPU 25 through the data bus 29. The gate control 49 supplies a gate control signal to the address control 53. The address control 53 enables the bus driver 52 and disables the bus driver 54. The physical address from the bus driver 55 is supplied to the sequence data RAM 45 through the address bus 31 and the bus driver 52. Operand data corresponding to the physical address supplied from the sequence data RAM 45 is output onto the data bus 39. A control signal is supplied from the translation timing generator 59 to the gate control 49. The gate control 49 outputs a control signal to disable the bus drivers 61, 65, and 67 and to enable the bus driver 63. The data bus 39 and the data bus 29 are connected to each other, and the operand data on the data bus 39 is output to the MPU 25 through the data bus 29. As a result, the MPU 25 executes a function designated by the function code "FNC" and the function code number "No.", e.g., an adding process.

When an operand is designated by a constant, a translation process is not performed, the operand is supplied to the MPU 25 through an instruction pointer in which a constant is written, the bus driver 65, and the data bus 29. That is, when "B" stored in the address "n + 5" in Fig. 3 is used, the address "n + 5" is supplied to the MPU 25 through the bus driver 65 and the data bus 29.

As described above, when the MPU 25 reads a sequence program from the sequence program RAM 43, operand data is designated by a register, the address translator 33 automatically translates a logical address into a physical address and supplies it to the MPU 25. Therefore, the MPU 25 need not perform the following processes:

1. Determination of register or constant

2. Determination of register type

3. Addition of destination definite offset of each register type

4. Determination of designation indefinite offset type belonging to program

5. Reading of designation indefinite offset amount belonging to program

6. Addition of designation indefinite offset amount belonging to program

7. Determination, reading, and addition of other indefinite offset amount

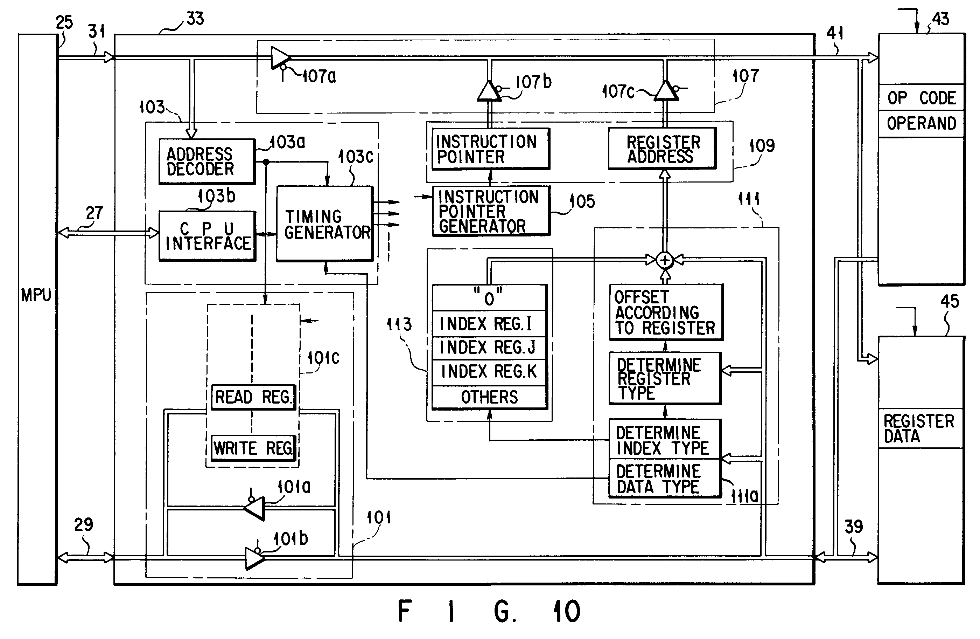

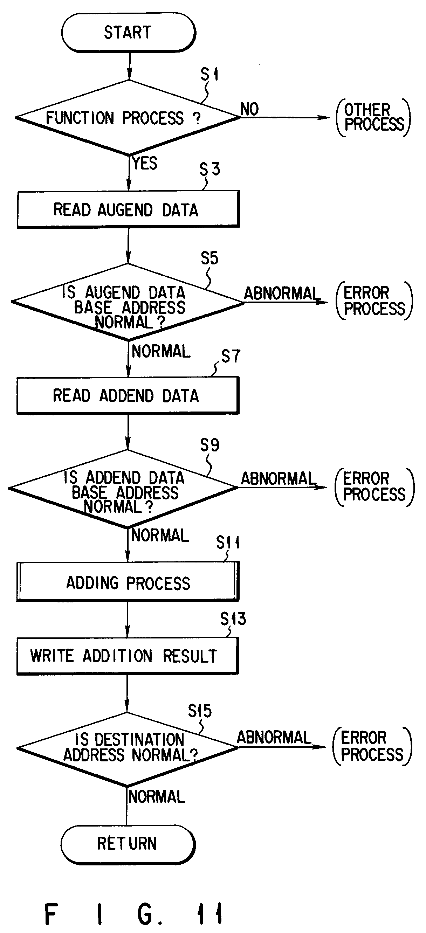

The second embodiment of the present invention will be described below with reference to Figs. 10 and 11. Note that the same reference numerals as in Fig. 6 denote the same parts in Figs. 10 and 11.

In the first embodiment, when the MPU 25 executes a function process, in a cycle for reading a sequence program from the memory 43, a register logical address written in the sequence program is translated into a physical address by the custom LSI 33. In the second embodiment, a custom LSI 33 translates a register logical address designated by a sequence program into a physical address to access a sequence data RAM 45, and the data of the physical address is read/written as data of a specific address designated by an MPU 25.

In the second embodiment, when a sequence program such as a function operation which can be processed by the custom LSI 33 is fetched, the custom LSI 33 sets a code corresponding a function process content in an internal register such that the MPU 25 is requested to perform the function process. When the MPU 25 is requested to perform the function process, the MPU 25 detects a content to be processed in accordance with the code and reads/writes the content at a specific address. Therefore, the custom LSI accesses the sequence data RAM 45 at an address designated by the sequence program to exchange data with the MPU 25. When the function process is ended, the MPU 25 outputs process end information, such that the custom LSI starts a sequence process again.

The custom LSI 33 which performs the above operations, as shown in Fig. 10, includes a data bus control 101, a gate control 103, an instruction pointer generator 105, an address bus control 107, an address bus latch 109, an address translator 111, and an address modification 113.

The data bus control 101 has bus drivers 101a and 101b controlled by a command from the gate control 103 and bi-directionally transmits data between data buses 29 and 39, and the data bus control 101 has a large number of internal registers 101c and can be accessed from the data buses 29 and 39 in accordance with the command from the gate control 103.

As the specific address, an arbitrary address which is not assigned in the address space of the main memory of the MPU 25 is used.

The gate control 103 includes an address decoder 103a for determining the address data of an address bus 29, a CPU interface 103b connected to a control bus 27 including a read/write command line, and a timing generator 103c for generating various control commands in accordance with commands from the address decoder 103a, the CPU interface 103b, and the address translator 111.

When the custom LSI 33 accesses the sequence program of the RAM 43, the instruction pointer generator 105 generates the address of the sequence program.

The address bus control 107 has bus drivers 107a to 107c and selects one address from the addresses of the address bus 31 and the address latch 109 as an address to be sent to an address bus 41.

In accordance with the OP code of the sequence program read from the RAM 43, the address translator 111 determines whether the data of an operand is a constant or a register logical address. When the operand is the register logical address, the address translator 111 determines a register type and translates the logical register into a physical register by adding offsets which are defined for every register. When the data is the register logical address, the address translator 111 determines an index type, and the content of the index register of the address modification 113 is added to the index type to be used as a physical address. In addition, data type discrimination is performed by the OP code. In this discrimination, when the address translator 111 determines that a function process is required, the address translator 111 outputs a process request signal to request the MPU 25 through the gate control 103 to perform a function process.

With the above arrangement, execution of the sequence program of the function process shown in Fig. 3 will be described below.

The custom LSI 33 outputs an address generated by the instruction pointer generator 105 to the address bus 41 through the address latch 109 and the address bus control 107 and reads the sequence program from the RAM 43 onto the data bus 39 to sequentially perform a bit operation process by a bit operation processing unit (not shown). At this time, it is assumed that a program code "FNC" at an address n is read to the data bus 39. In response to the program code "FNC", a data type discriminator 111a of the address translator 111 detects that the function process is performed. The data type discriminator 111a reads a program code "No." of an address n + 1 and stores the program code "No." in the predetermined internal register 101c of the data bus control 101 as a code corresponding to a function processing content and requests the MPU 25 to performing the function process through the gate control 103 and the control bus 27.

When the MPU 25 receives the request of the function process, the MPU 25 reads the code of the predetermined internal register 101c to determine the content of the function process (in the example in Fig. 3, the MPU 25 detects the function process in which two numerical values A and B are added to each other as a numerical value C).

When the MPU 25 performs read access to the data of a specific address through the address bus 31 and the control bus 27 on the basis of the content of the function process, a timing generator 103c is operated through the address decoder 103a and the CPU interface 103b of the gate control 103 to output an address n + 2 of an instruction pointer to the address bus 41, and store a program code "WORP" in the custom LSI 33. The address translator 111 determines that the program code (OP code) "WOPR" to the next program code (operand data) "A" are register logical addresses, and index type discrimination is performed to determine the index register of index modification and offsets which are defined for every register.

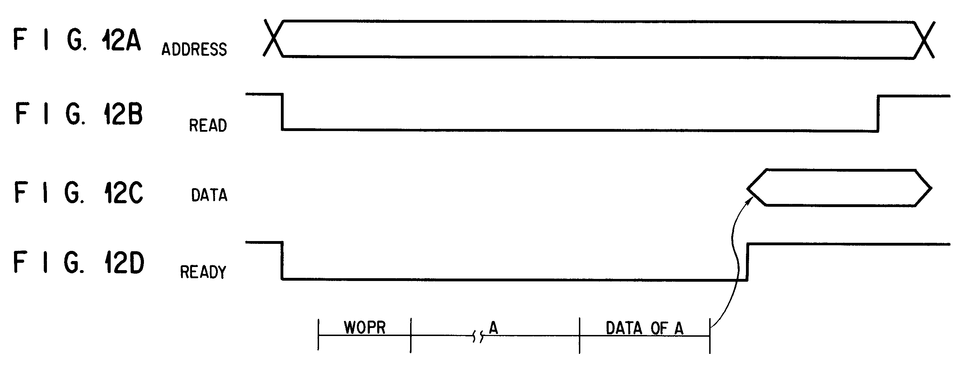

The instruction pointer is incremented to fetch the program code "A" from the RAM 43 in the address translator 111, and the offsets which are defined for every register and the content of the index register are added to the register logical address to generate a physical address. Register data is read from the sequence data of the RAM 45 on the data bus 39 and the bus driver 101a is enabled, thereby transmitting the register data onto the data bus 29. The MPU 25 reads the register data on the data bus 29 as the data of the specific address. Thereafter, when the MPU 25 performs read access to the specific address again, a program code (OP code) "CL" from the RAM 43 is fetched in the address translator 111, and the MPU 25 determines that the next program code (operand data) "B" is a constant. Thereafter, the instruction pointer is incremented to read the program code "B" from the RAM 43 onto the data bus 39. In this case, since the operand data is determined as a constant, the operand data is directly transmitted onto the data bus 29, and the MPU 25 reads the operand data as the data of the specific address. The MPU 25 uses the function of the function process to calculate the sum of the two read numerical values A and B, the resultant value C obtained by this calculation is supplied onto the data bus 29, and the MPU 25 performs write access to the specific address. Therefore, an address n + 6 of the instruction pointer is output to the address bus 41, and the program code (OP code) "WOPR" from the RAM 43 is fetched by the address translator 111. In accordance with the operand code "WOPR", the translator 111 determines that the next program code (operand data) "C" is a register logical address. The translator 111 determines an index register and offsets which are defined for every register to increment the instruction pointer, and operand data "C" at an address n + 7 is read from the RAM 43 onto the data bus 39. The address translator 111 adds the index register content and the offset which is defined for every register to the logical address of the operand data "C" to translate the logical address into a physical address. This physical address is output onto the address bus 41 to designate a predetermined position of the RAM 45. On the other hand, the function process result C write-accessed by the MPU 25 is transmitted onto the data bus 39 at this time, and the function process result C is stored at the physical address of the RAM 45. When a series of the function processes are finished, the custom LSI 33 increments the instruction pointer again and starts a bit operation process. A series of function processes executed by the MPU 25 are schematically shown in Fig. 11. Augend data in step S3 corresponds to "A" in Fig. 3. Whether the base address of augend data in step S5 is normal is determined by determining whether an address designated by a register A falls within a predetermined range. For example, this discrimination is performed by comparing the address with address range values stored in a table (not shown). Timing charts for reading augend data are shown in Figs. 12A through 12D. To read the addend data in step S7 is to read "B" in Fig. 3. As in step S5, in step S9, it is determined whether an address designated by a register B falls within a predetermined range. In step S11, the addition result is written in "C" shown in Fig. 3. However, when the address of the "C" is abnormal, a write command is not output, and write access is not actually performed. Therefore, in step S15, it is determined whether the write access is normally performed.

In the above embodiments, a case wherein the data buses 29 and 39 have the same number of bits has been described. However, when the numbers of bits are different from each other, (e.g., 8 bits and 16 bits), transmission and reception of data can be performed a plurality of times (e.g.,

twice) using the internal register 101c of the data bus control 101. When operand data including register type data is used as a sequence program code, the same effect as described above can be obtained.

**Claims**

1. A programmable controller having a microcomputer (25) for performing a function process including system management and a numerical operation during execution of a sequence program, a custom LSI (33), connected to said microcomputer through a system bus (31, 29), for performing a bit operation process of the sequence program, and a memory (43) for storing the sequence program, characterized in that, when said microcomputer is to perform the function process, in a cycle for reading the sequence program from said memory, said custom LSI has a function of translating a register logical address written in the sequence program into a physical address of said microcomputer.

2. A controller according to claim 1, characterized in that said custom LSI is constituted by a gate array.

3. A controller according to claim 1, characterized in that said custom LSI comprises means (52, 47) for disconnecting a system bus (31, 29) of said microcomputer from a system bus (41, 39) of said custom LSI.

4. A controller according to claim 1, characterized in that said custom LSI comprises means for, when said microcomputer is to read/write data by a function process, translating a register logical address designated by the sequence program and read/write access to a specific address into a physical address, accessing said data memory, and reading/writing accessed data as data of said specific address.

F I G. 1

F I G. 2

DATA BUS
ADDRESS BUS
ROM — 23

CUSTOM L S I — 21

CONTROL BUS — 3
DATA BUS — 5
ADDRESS BUS — 7

SEQUENCE DATA RAM — 15

SEQUENCE PROGRAM RAM — 13

SYSTEM ROM — 11

MPU — 17

11

EP 0 508 283 A2

SEQUENCE PROGRAM

F I G. 3

F I G. 8

12

EP 0 508 283 A2

F I G. 4A

ST 21
ADDEND DATA READ PROCESS

ST 23
ADDING PROCESS

ST 25
STORE ADDITION RESULT

A

B

RETURN

F I G. 4B

F I G. 5

F I G. 6

**F I G. 7**

ADDRESS BIT
FED
000

ADDRESS BIT
FED
000

| XY REGISTER | | XY REGISTER |
| | | T REGISTER |
| | | C REGISTER |
| | | ZW REGISTER |
| | | L REGISTER |

001

001

| D REGISTER | | D REGISTER |

010

010

| T REGISTER | | RW REGISTER |
| | | F REGISTER |

REAL MEMORY AREA AFTER
TRANSLATED INTO PHYSICAL
ADDRESS

011

| C REGISTER |

0000H ~ 27FFH

100

| RW REGISTER |

101

| ZW REGISTER |

110

| L REGISTER |

111

| F REGISTER |

MEMORY AREA REPRESENTED
BY LOGICAL ADDRESS

0000H ~ FFFFH

F I G. 9

F I G. 10

EP 0 508 283 A2

START

S1

FUNCTION PROCESS ? —NO→ (OTHER PROCESS)

YES

S3

READ AUGEND DATA

S5

IS AUGEND DATA BASE ADDRESS NORMAL ? —ABNORMAL→ (ERROR PROCESS)

NORMAL

S7

READ ADDEND DATA

S9

IS ADDEND DATA BASE ADDRESS NORMAL ? —ABNORMAL→ (ERROR PROCESS)

NORMAL

S11

ADDING PROCESS

S13

WRITE ADDITION RESULT

S15

IS DESTINATION ADDRESS NORMAL? —ABNORMAL→ (ERROR PROCESS)

NORMAL

RETURN

F I G. 11

F I G. 12A ADDRESS

F I G. 12B READ

F I G. 12C DATA

F I G. 12D READY

WOPR | A | DATA OF A

EP 0 508 283 A2